# EUROPÄISCHE PATENTSCHRIFT

(11) **EP 0 519 524 B1**
(45) Veröffentlichungstag und Bekanntmachung des Hinweises auf die Patenterteilung: **15.11.1995**
(21) Anmeldenummer: 92115143.7
(22) Anmeldetag: 28.06.1988
(51) Int. Cl.: F16L 15/00, F16L 57/00, B65D 59/02, B65D 59/06, F16L 15/08

(54) **Schutzvorrichtung für Rohrenden**
Protecting device for pipe ends
Dispositif de protection des extrémités de tuyaux

(30) Priorität: 30.06.1987 DE 3721541
(43) Veröffentlichungstag der Anmeldung: 23.12.1992
(62) Teilanmeldung aus: 88110251.1
(73) Patentinhaber: Drilltec Patents & Technologies Company, Inc., Houston, Texas 77043 (US)
(72) Erfinder: Dreyfusz, Wilfried, W-3111 Eimke (DE); Remp, Thomas E., Houston, Texas 77056 (US); Müller, Kurt, W-3110 Uelzen (DE)
(74) Vertreter: König, Norbert, Dipl.-Phys. Dr.

(56) Entgegenhaltungen:
- FR-A- 2 530 225
- US-A- 3 000 402
- US-A- 4 020 873
- US-A- 4 655 256

## Beschreibung

Die Erfindung betrifft eine Schutzvorrichtung für Rohrenden.

Schutzvorrichtungen, die aus einem Metallgehäuse und einem einteiligen Kunststoffeinsatz bestehen oder aus einem Metallstopfen und einem einteiligen hülsenförmigen Überzug, sind seit langem bekannt, vgl. US-A-4 655 256, US-A-3 000 402 und FR-A-2 530 225. Nachteilig ist, daß die Einsätze und Überzüge mit relativ aufwendigen Werkzeugen hergestellt werden müssen, bei denen entweder nach dem Spritzen der Gewindekern herausgeschraubt oder der Einsatz bzw. Überzug vom Kern abgeschraubt werden muß. Werkzeuge mit sogenannten Fallkernen sind wegen des komplizierten Aufbaues nur zur Herstellung von Vorrichtungen hoher Stückzahlen wirtschaftlich einsetzbar.

Ferner sind auch nur aus Kunststoff bestehende Schutzvorrichtungen seit langem bekannt.

Schutzvorrichtungen mit einteiligen Einsätzen oder Überzügen sowie Schutzvorrichtungen, die nur aus Kunststoff bestehen, haben ferner den Nachteil, daß sie bei tiefen Temperaturen infolge des Zusammenziehens des Kunststoffes schwer zu demontieren und noch schwerer zu montieren sind. Das kann beim Gebrauch solcher Schutzvorrichtungen, z. B. an Erdölrohren, die bei sehr unterschiedlichen Temperaturen benutzt werden, zu erheblichen Problemen führen, insbesondere bei der Verwendung an Rohren mit großem Durchmesser.

Bekannt sind auch Schutzvorrichtungen,bei denen das Metallgehäuse oder der Metallstopfen am oberen Rand einfach umgebogen ist, um den Schutzkappen bzw. Schutzstopfen eine höhere Stabilität zu geben. In vielen Fällen, insbesondere bei Rohren mit großem Durchmesser bzw. bei sehr schweren Rohren, reicht die Stabilität aber nicht aus, um das Rohrende und das Gewinde des Rohres gegen Schlagbeanspruchung wirksam zu schützen
Aus der US-A-4 020 873 ist eine Schutzvorrichtung der betreffenden Art bekannt, die aus einem Gehäuse und einem hülsenförmigen Einsatz aus Kunststoff besteht und am äußeren Ende einen gefalzten Gehäuserand aufweist. Der Einsatz besteht aus zwei teilzylindrischen Mantelteilen, die in Umfangsrichtung durch an ihrem äußeren Ende angeformte Stege miteinander verbunden sind, derart, daß die Mantelteile im Montagezustand das Rohrende nicht in seinem gesamten Umfangsbereich umgreifen, sondern vielmehr die in Umfangsrichtung einander zugewandten Flächen der Mantelteile voneinander beabstandet sind.

Zum Schutz eines Rohrendes werden zunächst die locker miteinander verbundenen teilzylindrischen Mantelteile auf das zu schützende Gewinde des Rohrendes aufgeschraubt. Dann wird das zylindrische Metallgehäuse auf die Mantelteile in Axialrichtung aufgeschoben, so daß diese fixiert sind.

Ein Nachteil dieser bekannten Schutzvorrichtung besteht darin, daß die Stabilität des Einsatzes gering ist, da die beiden Mantelteile nur durch dünne Stege miteinander verbunden sind. Im nicht montierten Zustand des Einsatzes sind die Stege bei Relativbewegung der Mantelteile zueinander, also beispielsweise bei Handhabung des Einsatzes zur Vorbereitung auf die Montage, einer Biegebeanspruchung ausgesetzt. Es besteht somit insbesondere bei häufiger Benutzung die Gefahr, daß die Stege brechen. Dies hat zur Folge, daß der Einsatz unbrauchbar wird und ersetzt werden muß.

Da die Stege in Axialrichtung U-förmig ausgebildet sind, ist die axiale Lage der Mantelteile zueinander nicht genau definiert. Dies hat zur Folge, daß beispielsweise beim Aufsetzen oder Aufschrauben des Einsatzes auf das zu schützende Rohrgewinde zwischen den beiden Mantelteilen ein axialer Versatz auftreten kann, so daß das Aufschrauben des Einsatzes nicht oder nur schwer möglich ist. Darüber hinaus besteht die Gefahr, daß dabei das in den Mantelteilen gebildete Gewinde beschädigt wird. Die Handhabung der bekannten Schutzvorrichtung ist somit kompliziert und zeitaufwendig. Ein weiterer Nachteil der bekannten Schutzvorrichtung besteht darin, daß aufgrund der die Mantelteile verbindenden, an die Mantelteile angeformten Stege zur Herstellung des aus Kunststoff bestehenden Einsatzes eine komplizierte Spritzgießform erforderlich ist. Die Herstellung des Einsatzes ist somit kompliziert und teuer, so daß die bekannte Schutzvorrichtung teuer in der Herstellung ist.

Der Erfindung liegt die Aufgabe zugrunde, eine Schutzvorrichtung der betreffenden Art anzugeben, deren Stabilität verbessert und deren Handhabung vereinfacht ist und die einfach und kostengünstig herstellbar ist.

Diese Aufgabe wird durch die im Anspruch 1 angegebene Lehre gelöst.

Aufgrund der erfindungsgemäßen Ausbildung ist die Herstellung des Einsatzes bzw. des Überzuges mit einfachen Werkzeugen möglich, die wesentlich billiger herzustellen sind als die bisher im Stand der Technik eingesetzten Werkzeuge. Die Werkzeuge brauchen einfach nur mit Auswerferstiften versehen zu werden, um die Spritzgußform zu entformen. Hierdurch kann die Kühlzeit und die Herstellungszeit wesentlich verkürzt werden.

Im Einsatz können Nuten, beispielsweise zum Einlegen eines Bodens, ausgebildet sein, um aus einer offenen Schutzkappe eine geschlossene Schutzkappe zu machen.

In die Nuten können auch separate Dichtungselemente eingelegt werden, wie dies dem Anspruch 3 zu entnehmen ist. Anstelle solcher Dichtungselemente können auch angespritzte dünnwandige Stege als Axialdichtringe vorgesehen werden.

Die Weiterbildung gemäß Anspruch 4 ermöglicht das Durchstecken eines stabförmigen Hilfswerkzeuges zum Montieren und Demontieren der Schutzvorrichtungen. Die ausgebogenen Zungen dienen dabei als Verstärkung der Ansatzflächen des Hilfswerkzeuges und fungieren gleichzeitig als Mitnehmer für den Kunststoffeinsatz, da sie an den seitlichen Begrenzungen des Einsatzes bzw. des Überzuges anliegen.

Durch die Weiterbildung gemäß Anspruch 5 ist eine besonders gute Fixierung des Einsatzes bzw. des Überzuges am Metallkörper in axialer Richtung erreichbar. Weitere vorteilhafte und zweckmäßige Weiterbildungen sind in den weiteren Unteransprüchen angegeben.

Die Erfindung soll nachfolgend anhand der beigefügten Zeichnung, in der Ausführungsbeispiele dargestellt sind, näher erläutert werden.

Es zeigt:
- Fig. 1: eine erste Ausführungsform eines zweiteiligen Einsatzes einer erfindungsgemäßen Schutzvorrichtung,
- Fig. 2: eine Draufsicht auf eine der beiden Anlageflächen einer Hälfte des Einsatzes nach Fig. 1,
- Fig. 3: eine zweite Ausführungsform eines erfindungsgemäßen Einsatzes,
- Fig. 4: eine dritte Ausführungsform eines erfindungsgemäßen Einsatzes,
- Fig. 5: eine vierte Ausführungsform,
- Fig. 6: eine schematische Darstellung einer ersten Ausführungsform eines Metallgehäuses der erfindungsgemäßen Schutzvorrichtung,
- Fig. 7: einen Axialschnitt durch das Metallgehäuse nach Fig. 6,
- Fig. 8: eine zweite Ausführungsform eines Metallgehäuses,
- Fig. 9: eine dritte Ausführungsform eines Metallgehäuses,
- Fig. 10: eine perspektivische Ansicht eines aus zwei Hälften zusammengesetzten Einsatzes,
- Fig. 11: eine perspektivische Darstellung eines über den Einsatz nach Fig. 10 stülpbaren Metallgehäuses,
- Fig. 12: ein erstes Ausführungsbeispiel eines zylindrischen Metallstopfens einer erfindungsgemäßen Schutzvorrichtung,
- Fig. 13: einen Schnitt durch den Metallstopfen nach Fig. 12,
- Fig. 14: eine zweite Ausführungsform eines Metallstopfens und
- Fig. 15: eine dritte Ausführungsform eines Metallstopfens.

Soweit sachlich zweckmäßig, sind in den Figuren der Zeichnung gleiche Bauteile mit den gleichen Bezugszeichen versehen.

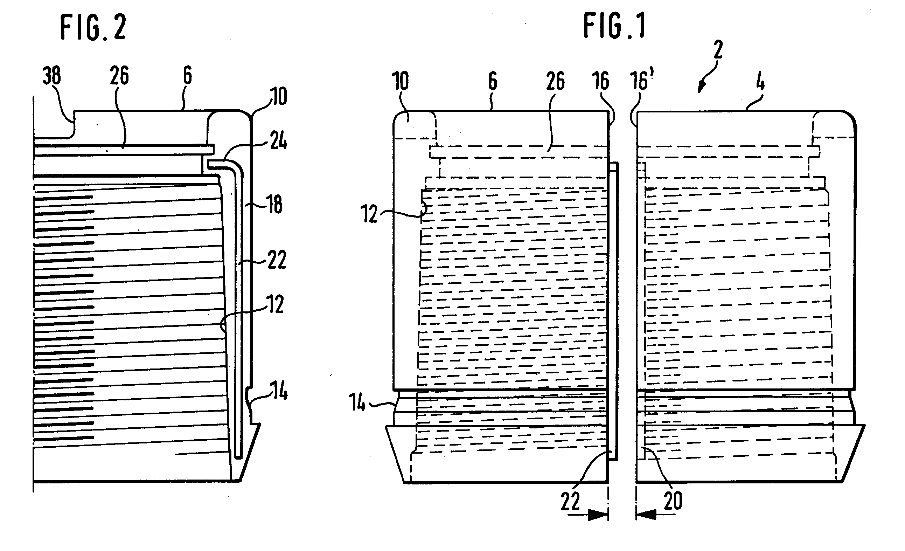

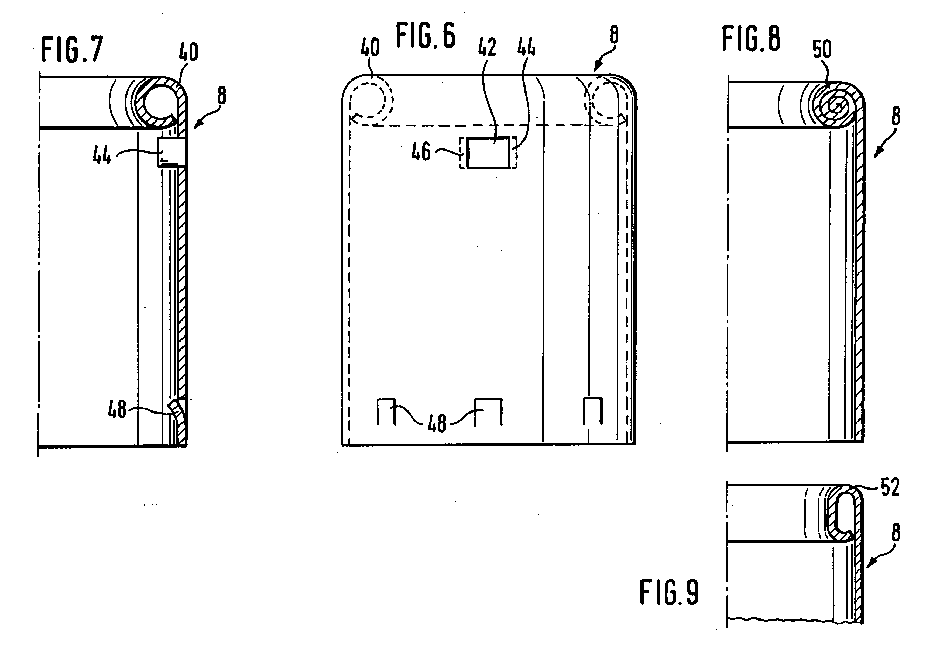

Die Zeichnung zeigt in den Fig. 1 bis 5 und 10 einen Einsatz 2, bestehend aus zwei Hälften 4, 6 für ein Metallgehäuse 8 nach den Fig. 6 bis 9 und 11. Jede Hälfte des Einsatzes ist halbzylindrisch ausgebildet und weist stirnseitig ein verdicktes Ende 10 auf. Auf der Innenfläche ist ein Gewinde 12 ausgebildet. Auf der Außenfläche kann eine umlaufende Umfangsnut 14 ausgebildet sein.

Jede Einsatzhälfte weist zwei Anlageflächen 16, 18 bzw. 16', 18' auf, von denen in den Fig. 1 bis 5 jeweils nur eine zu sehen ist, die mit dem Bezugszeichen 16 bzw. 16' versehen ist.

Die Anlageflächen der einen Einsatzhälfte 4 weisen eine Nut 20 und die Anlageflächen der anderen Einsatzhälfte eine komplementär zur Nut ausgebildete Feder 22 auf. Es kann auch die eine Anlagefläche der Einsatzhälften 4 und 6 mit einer Nut und die andere Anlagefläche mit einer entsprechenden Feder versehen sein.

Im Bereich des verdickten Endes 10 weisen die Feder und die Nut eine radial einwärts gerichtete Abbiegung bzw. Abwinklung 24 auf.

Die Einsatzhälften 4 und 6 gemäß Fig. 1 und 2 weisen ferner innenseitig im Bereich des verdickten Endes 10 eine Nut 26 auf.

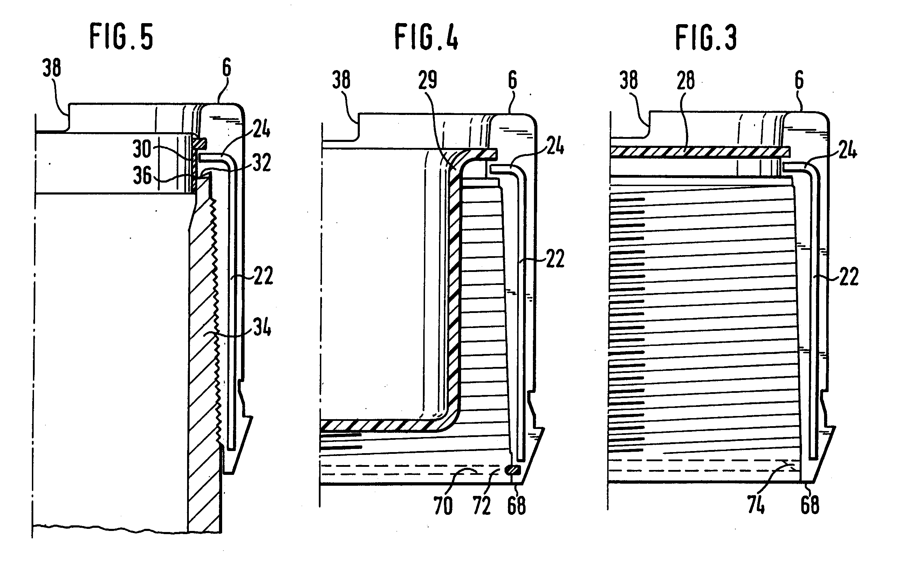

Die Nut 26 bildet im zusammengebauten Zustand der beiden Einsatzhälften eine umlaufende innere Ringnut in die beispielsweise ein Kunststoffdeckel 28 einsetzbar ist, um so eine geschlossene Schutzkappe zu bilden, wie dies in der Fig. 3 dargestellt ist.

Der Deckel kann auch eine Topfform 30 haben, wie dies in der Fig. 4 dargestellt ist.

Die Fig. 5 zeigt eine Ausführungsform, bei der in die Nut 26 eine Lippendichtung 30 eingesetzt ist, die eine den Dichtspalt 32 zwischen einem Rohr 34 und dem Einsatz 2 abdichtend überragende Lippe 36 aufweist.

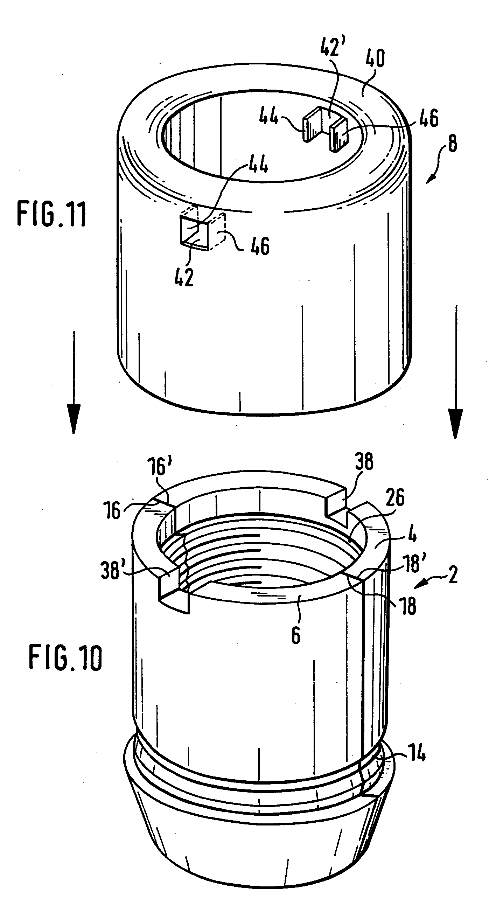

Das verdickte Ende der Stirnseite der Einsatzhälften ist jeweils mit einer rechteckförmigen Ausnehmung 38, 38' versehen. Dies ist besonders deutlich der Fig. 10 entnehmbar, die die beiden Einsatzhälften 4 und 6 im zusammengefügten Zustand zeigt.

Es soll nun Bezug genommen werden auf die Fig. 6 bis 9 und 11, die verschiedene Ausführungsformen des Metallgehäuses 8 zeigen. Die Fig. 6 zeigt ein Metallgehäuse, dessen äußerer stirnseitiger Rand mit einer einwärts gerichteten Rollkante 40 versehen ist. Unterhalb der Rollkante weist das zylindrische Metallgehäuse 8 zwei diametral gegenüberliegende Öffnungen 42, 42' auf mit zwei seitlichen einwärts gebogenen Zungen 44, 46, wie dies besonders deutlich den Fig. 7 und 11 entnehmbar ist. Beim Überstülpen des Metallgehäuses 8 auf den Einsatz 2, vgl. Fig. 10 und 11, greifen die Zungen 44 und 46 in die Ausnehmungen 38, 38' ein, wodurch eine Arretierung in Umfangsrichtung erreicht wird. Durch die Öffnungen 42, 42' und die Ausnehmungen 38, 38' kann ein stabförmiges Werkzeug gesteckt werden bei der Montage und Demontage der Schutzvorrichtung.

Im unteren Teil weist das Metallgehäuse umfangsmäßig verteilt einwärts gerichtete Zungen 48 auf, die in die Umfangsnut 14 des Einsatzes 2 eingreifen und dadurch eine axiale Fixierung bewirken.

Bei der Ausführungsform nach Fig. 8 ist die Rollkante spiralförmig 50 ausgebildet, wobei die Spirale auch so weit ausgebildet sein kann, daß der Spiralhohlraum voll ausgefüllt ist.

Die Fig. 9 zeigt eine Rollkante in Ovalform 52.

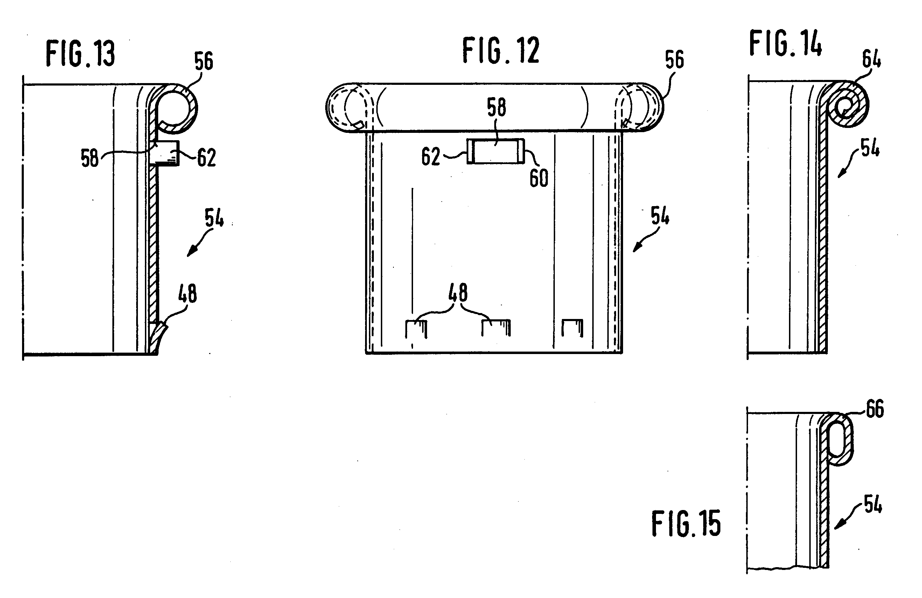

In den Fig. 12 bis 15 ist ein hohlzylindrischer Metallstopfen 54 dargestellt, der an seinem äußeren stirnseitigen Ende eine auswärts gerichtete Rollkante 56 aufweist. Der Metallstopfen 50 wird von Überzughälften umgeben, die nicht dargestellt sind, aber ganz analog ausgebildet sind wie die Einsatzhälften 4 und 6 nach den Fig. 1 bis 5. Der Metallstopfen 54 weist zwei diametral gegenüberliegende Öffnungen 58 mit seitlichen auswärts gerichteten Zungen 60, 62 auf, vgl. auch Fig. 13. Diese Zungen 60, 62 greifen in ganz analoger Weise wie bei dem Metallgehäuse 8 in entsprechende Ausnehmungen des nicht dargestellten Überzuges ein.

Die Fig. 14 und 15 zeigen zwei weitere Ausführungsformen des Metallstopfens, wobei die Rollkante bei der Ausführungsform nach Fig. 14 in Form einer Spirale 64 und bei der Ausführungsform nach Fig. 15 in Form eines Ovals 66 ausgebildet ist.

Um auch eine Abdichtung der Schutzvorrichtung an dem der Stirnseite gegenüberliegenden Ende bzw. am Gewinde anfangsseitigen Ende 68 gegenüber dem Rohr 34 zu erhalten, kann der Einsatz 2 bei einer Schutzkappe innenseitig an diesem Ende eine umlaufende Nut für einen O-Ring 72, was in dem Fig. 4 für die Einsatzhälfte 6 gestrichelt dargestellt ist, oder an diesem Ende 68 innenseitig einen umlaufenden, angeformten, spitz zulaufenden Dichtsteg 74 aufweisen, was in der Fig. 3 für die eine Einsatzhälfte 6 gestrichelt dargestellt ist.

Ganz analog kann der Überzug bei einem Schutzstopfen außenseitig eine Nut für einen O-Ring oder einen angeformten, umlaufenden Dichtsteg aufweisen, was in der Zeichnung nicht dargestellt ist.

## Patentansprüche

1. Schutzvorrichtung für Rohrenden, je nach Verwendung als Kappe oder als Stopfen, mit einem Metallgehäuse (8) und einem hülsenförmigen Einsatz (2) aus elastomerem Material oder mit einem Metallstopfen (54) und einem hülsenförmigen Überzug aus elastomerem Material, wobei das Metallgehäuse oder der Metallstopfen rohrförmig ausgebildet ist und am äußeren Ende einen gebördelten oder gefalzten Rand (40; 56) aufweist, und wobei der Einsatz (2) oder der Überzug aus wenigstens zwei teilzylindrischen Mantelteilen (4, 6) besteht, und die teilzylindrischen Mantelteile (4, 6) zueinander Anlageflächen (16, 18; 16', 18') aufweisen, die für eine Nut/Federverbindung mit axial verlaufenden Federn (22) und Nuten (20) versehen sind.

2. Schutzvorrichtung nach Anspruch 1, **dadurch gekennzeichnet**, daß die Federn (22) und die Nuten (20) am stirnseitigen, verdickten Ende (10) des Einsatzes (2) oder des Überzuges eine einwärts gerichtete Abbiegung oder Abwinklung (24) aufweisen.

3. Schutzvorrichtung nach Anspruch 1, **dadurch gekennzeichnet**, daß der Einsatz (2) im Stirnbereich innenseitig eine umlaufende Nut (26) zur Aufnahme eines Deckels (28, 29) oder eine den Dichtspalt (32) zwischen Einsatz (2) und Rohrende (34) abdichtend überragende Lippendichtung (30) aufweist.

4. Schutzvorrichtung nach Anspruch 1, **dadurch gekennzeichnet**, daß der Einsatz (2) oder die Einsatzteile (4, 6) oder der Überzug oder die Überzugsteile stirnseitig Ausnehmungen (38, 38') aufweisen und daß das Metallgehäuse (8) oder der Metallstopfen (54) unterhalb des Bördelrandes (40, 56) den Ausnehmungen zugeordnete Öffnungen (42, 42'; 58) mit jeweils zwei rechtwinklig einwärts oder auswärts gerichteten Zungen (44, 46; 60) aufweist, die im zusammengebauten Zustand der Schutzvorrichtung in die Ausnehmungen (38, 38') eingreifen.

5. Schutzvorrichtung nach Anspruch 1, **dadurch gekennzeichnet**, daß der Einsatz (2) oder die Einsatzteile (4, 6) oder der Überzug oder die Überzugsteile außenseitig bzw. innenseitig wenigstens eine Umfangsnut (14) aufweisen, in die am Metallgehäuse (8) oder Metallstopfen (54) ausgebildete, einwärts oder auswärts gerichtete Zungen (48) eingreifen.

6. Schutzvorrichtung nach Anspruch 1, **dadurch gekennzeichnet**, daß der Einsatz (2) oder der Überzug am der Stirnseite gegenüberliegenden Ende (68) innenseitig bzw. außenseitig eine umlaufende Nut (70) zur Aufnahme eines O-Dichtringes (72) oder eine angeformte, umlaufende Dichtlippe (74) aufweist.

7. Schutzvorrichtung nach Anspruch 6, **dadurch gekennzeichnet**, daß der Einsatz (2) anstelle der Nut mit Lippendichtung eine entsprechend ausgebildete, angeformte umlaufende Lippendichtung aufweist.

8. Schutzvorrichtung nach Anspruch 1, **dadurch gekennzeichnet**, daß der Rand kreisförmig oder oval oder in Form einer Teil- oder Vollspirale (50, 64) gerollt ist.

## Claims

1. A protecting device for pipe ends in the form of a cap or plug as a function of application, fitted with a metal housing (8) and a sleeve-like insert (2) made of an elastomeric material or with a metal plug (54) and a sleeve-like slip cover made of an elastomeric material, in which case the metal housing or the metal plug is tubular and has a flanged or folded rim (40; 56) at the outer end and in which case the insert (2) or the slip cover consist of at least two partially cylindrical jacket sections (4, 6) and the partially cylindrical jacket sections (4, 6) exhibit contact surfaces (16, 18; 16', 18') fitted with the axially located springs (22) and the grooves (20) to provide a groove/spring connection.

2. A protecting device in accordance with claim 1, characterized by the fact that the springs (22) and the grooves (20) exhibit an inward pointed bend or angle (24) at the frontal thickened end (10) of the insert (2) or of the slip cover.

3. A protecting device in accordance with claim 1, characterized by the fact that the frontal area of the insert (2) exhibits on its inside a continuous groove (26) to receive a cover (28, 29) or exhibits a lip seal (30) that projects beyond the sealing gap (32) between the insert (2) and the pipe end (34) in a sealing manner.

4. A protecting device in accordance with claim 1, characterized by the fact that the insert (2) or the insert sections (4, 6) or the slip cover or the slip cover sections are fitted with recesses (38, 38') at the front and that the metal housing (8) or the metal plug (54) below the flanged rim (40, 56) exhibit openings (42, 42'; 58) arranged in relation to the recesses and fitted with two tongues (44, 46; 60) that point inward or outward at a right angle and interact with the recesses (38, 38') in the assembled protecting device.

5. A protecting device in accordance with claim 1, characterized by the fact that the insert (2) or the insert sections (4, 6) or the slip cover or the slip cover sections are on their outside or inside fitted with at least one peripheral groove (14) to receive the tongues (48) that are fitted to the metal housing (8) or the metal plug (54) and point inward or outward.

6. A protecting device in accordance with claim 1, characterized by the fact that the insert (2) or the slip cover are on the inside or outside of the end (68) located opposite the front end fitted with a continuous groove (70) to receive an O-ring (72) or with an integrally formed continuous sealing lip (74).

7. A protecting device in accordance with claim 6, characterized by the fact that the insert (2) is fitted with a correspondingly and integrally formed continuous lip seal to replace the groove with lip seal.

8. A protecting device in accordance with claim 1, charaterized by the fact that the rim is rolled in a round or oval manner or in the form of a partial or full spiral (50, 64).

## Revendications

1. Dispositif de protection pour des extrémités de tuyaux, selon l'utilisation en tant que coiffe ou en tant que bouchon, avec un carter métallique (8) et un insert en forme de douille (2) en matériau élastomère ou avec un bouchon métallique (54) et un revêtement en forme de douille en matériau élastomère, le carter métallique ou le bouchon métallique étant formé sous forme de tuyau et présentant à l'extrémité externe un bord rabattu ou replié (40 ; 56) et l'insert (2) ou le revêtement étant constitué d'au moins deux pièces d'enveloppe partiellement cylindriques (4, 6) et les deux pièces d'enveloppe partiellement cylindriques (4, 6) présentant des surfaces d'appui l'une sur l'autre (16, 18 ; 16', 18') qui sont munies, pour un assemblage à rainure et languette, de languettes (22) et de rainures (20) s'étendant axialement.

2. Dispositif de protection selon la revendication 1, caractérisé en ce que les languettes (22) et les rainures (20) présentent une courbure ou pliure (24) dirigée vers l'intérieur à l'extrémité épaissie du côté frontal (10) de l'insert (2) ou du revêtement.

3. Dispositif de protection selon la revendication 1, caractérisé en ce que l'insert (2) présente, dans la zone frontale du côté intérieur, une rainure continue (26) pour recevoir un couvercle (28, 29) ou une garniture d'étanchéité à lèvre (30) en saillie scellant la fente d'étanchéité (32) entre l'insert (2) et l'extrémité de tuyau (34).

4. Dispositif de protection selon la revendication 1, caractérisé en ce que l'insert (2) ou les pièces de l'insert (4, 6) ou le revêtement ou les pièces de revêtement présentent du côté frontal des évidements (38, 38') et en ce que le carter métallique (8) ou le bouchon métallique (54) présente au-dessous du bord rabattu (40, 56) des orifices (42, 42' ; 58) adjoints aux évidements respectivement avec deux languettes (44, 46 ; 60) orthogonales dirigées vers l'intérieur ou vers l'extérieur qui viennent en prise dans les évidements (38, 38') à l'état assemblé du dispositif de protection.

5. Dispositif de protection selon la revendication 1, caractérisé en ce que l'insert (2) ou les pièces d'insert (4, 6) ou le revêtement ou les pièces de revêtement du côté extérieur ou respectivement du côté intérieur présentent au moins une rainure périphérique (14) dans laquelle viennent en prise des languettes (48) dirigées vers l'intérieur ou vers l'extérieur, formées sur le carter métallique (8) ou le bouchon métallique (54).

6. Dispositif de protection selon la revendication 1, caractérisé en ce que l'insert (2) ou le revêtement présente sur l'extrémité (68) opposée au côté frontal, du côté intérieur ou respectivement du côté extérieur, une rainure continue (70) pour recevoir un anneau d'étanchéité en O (72) ou une lèvre d'étanchéité (74) conformée continue.

7. Dispositif de protection selon la revendication 6, caractérisé en ce que l'insert (2), à la place de la rainure avec garniture d'étanchéité, présente une garniture d'étanchéité à lèvre réalisée en correspondance, conformée continue.

8. Dispositif de protection selon la revendication 1, caractérisé en ce que le bord est roulé en forme circulaire ou ovale ou en forme d'une spirale complète ou partielle (50, 64).
